# EUROPEAN PATENT SPECIFICATION

(11) **EP 0 607 739 B1**
(45) Date of publication and mention of the grant of the patent: **20.05.1998**
(21) Application number: 93500166.9
(22) Date of filing: 20.12.1993
(51) Int. Cl.: H02J 13/00, H02J 3/14

(54) **A management system for electric domestic appliances**
Regelungssystem für elektrische Hausgeräte
Système de contrôle pour des appareils électroménagers

(30) Priority: 22.12.1992 ES 9202593
(43) Date of publication of application: 27.07.1994
(73) Proprietor: NIESSEN S.A., E-20180 Oiartzun-Guipuzkoa (ES)
(72) Inventor: Arizti Urquijo, Fernando, E-20013 San Sebastian (ES); Sanchez Rodriguez, Juan Jose, E-20011 San Sebastian (ES)
(74) Representative: Davila Baz, Angel

(56) References cited:
- EP-A- 0 069 470
- EP-A- 0 091 290
- EP-A- 0 099 043
- EP-A- 0 208 597
- US-A- 4 464 724
- US-A- 4 510 398
- US-A- 4 847 781

## Description

The object of the present invention is a management system for electric domestic appliances, in particular for controlling the connection and regulation of the power conveyed to mains receivers, with special application in domestic or similar uses, according to remote commands, eg. via infrared, or local commands by actuating a switch.

### BACKGROUND OF THE INVENTION

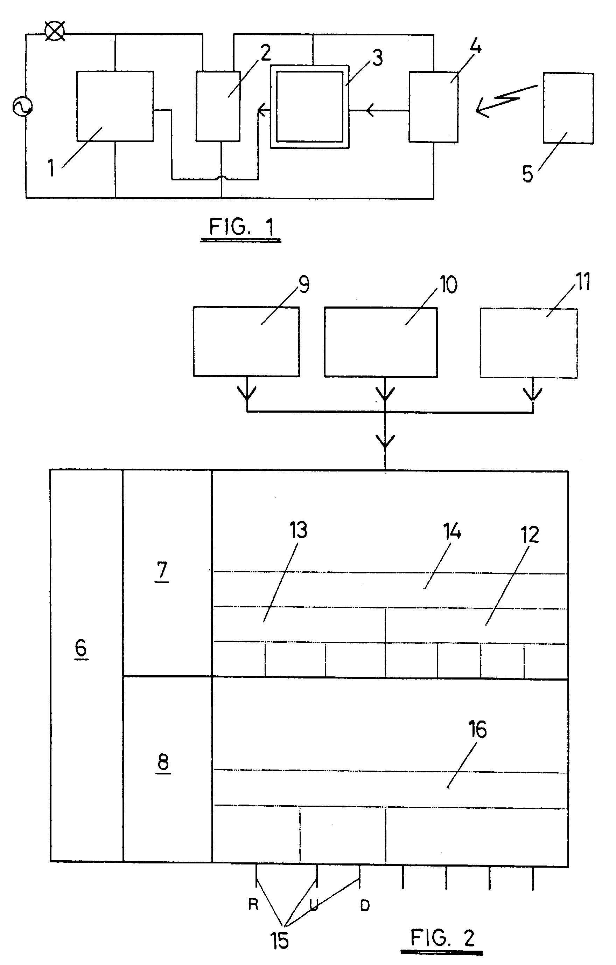

As figure 1 shows, such management systems typically comprise: I) an alternating current to alternating current converter 1 with a Triac and the corresponding triggering circuit (controlled by the Management System) in series with the mains supply and the load, enabling both the simple switching as well as the regulation of power in said load; II) a power supply 2 in parallel with the converter, to continually supply the electronic circuits of the Management System 3 and infrared detector 4, and which takes energy from the mains supply when the Triac is non-conducting; III) an infrared detector 4 which converts the signal modulated onto the infrared radiation coming from a remote control to electrical signals which it transfers to the Management System 3; IV) a remote control 5 which converts the keystrokes into messages modulated onto infrared radiation, thereby enabling a group of specific commands selected by the user to be transmitted from a distance. In general such systems accept manual commands "in situ" as a priority alternative to the remote control.

Some systems which have existed until now have the following characteristics: They reject incorrect or incomplete messages by comparing formats based on the scarce discrepancy between the local clocks of the remote control and the receivers due to their precision. The controls only select the receiver and do not include instruction codes so they can only give commands which depend on the prior state of the receiver, and these can only be switching commands, if the keystrokes are brief, or regulation commands, if they are persistent. The control of electronic switches is carried out with commercial integrated circuits designed for illumination control using normal incandescent lamps connected directly to the mains supply and not via a transformer as in the case of low tension halogenous lamps and therefore possibly giving rise to damage. The switch-on is as abrupt as in the case of a manual switch, with a detrimental affect on the average life of the lamps. The embodiments of these systems typically include commercial integrated circuits and many discreet components in a fairly complex arrangement, resulting in a laborious assembly and only moderate reliability.

EP-A-0 069 470 discloses a power management system for domestic appliances which responds to commands from a central control unit and commands from keys on a local slave unit. The slave units check messages sent from the central unit to determine whether it should act on the message and to check the validity of the message. If the slave unit detects a valid message it executes a command according to a code held in the message. By pressing local keys the user can effect dimming or brightening of a lamp associated with a slave unit. If the keys are held closed the lamp dims or brightens, whereas if the keys are pressed momentarily the lamp is switched on or off.

### DESCRIPTION OF THE INVENTION

According to the invention there is provided a management system for electric domestic appliances, in particular for controlling via an electronic switch the connection and regulation of power conveyed to associated mains receivers in response to messages received via local and remote commands, the system comprising an identifier subsystem which determines whether the said system is the intended recipient of the messages received, which detects incorrect or incomplete messages and which, in the case of a correct message, sets an interpreter register to include a command code contained within the message and information on whether the message was received as a brief pulse or a persistent pulse, the system further comprising an interpreter subsystem which interprets the command code from the interpreter register and interprets a brief message as a message to switch on, switch off or commutate the electronic switch on the one hand and a persistent message as a message to regulate the electronic switch on the other hand, and which generates control signals appropriate for the electronic switch based on a reversible counter, the direction, rate and final state of whose count sequence is controlled such that all changes in the power conveyed to the mains receiver, including switching on or switching off, are effected by going through a sequence of intermediate stages in accordance with the reversible count sequence.

In a preferred embodiment the remote control is effected by means of commands transmitted by infrared rays, the corresponding detectors and transmitters being of the type sensitive to infrared radiation.

The system which forms an embodiment of the present invention differs from those of similar function which currently exist by way of various improvements, resulting principally in greater infallibility in the identification of messages/commands, extensions to the group of commands which can be executed, thereby increasing the functional power of the remote control, a command execution which enables the extreme risks to be eliminated and the life of the receivers to be extended, and the integration of the whole System onto a single chip.

The advantage provided by this system as far as the identification of messages is concerned is based on the idea of synchronization by command bits which avoids the build-up of synchronization errors and as a result the incorrect identification of bits within the command, allowing wide tolerances in the remote control clocks and the receiver clocks as well as the influence of temperature without affecting message identification.

The enhancements of the remote management system are based on the introduction of unconditional commands (which do not depend on the state of the receivers), thereby overcoming the limitations of the existing systems which use conditional commands (such as "switch off if switched on" for example). Nevertheless, with this system it is also possible to recover these conditional commands if desired, i.e. to emulate the other systems. This is achieved by the efficient use of command codes which are included in the message. An additional enhancement to the remote management system results from the possibility of sending common commands to a group of predetermined switches by reserving a common direction code, with unmistakable identification and simple assignment.

The improvements in command execution over the case of electronic switches with Triacs, and which are characteristic by the avoidance of abrupt changes, not only prolong the life of the receivers (in particular incandescent lamps) but also ensure that unlike the existing systems there are no risks when supplying loads via a transformer (eg. low tension halogenous lamps) and working in vacuum, and do not lead to the deterioration of the transformer, the Triac, nor even of the fuse. This is achieved by adopting a principle of embodiment based on a single sequence and varying the rate and direction of execution of the sequence as well as the final state. Use is made of commercial chips to control the triggering delays according to an input control voltage and the synchronization with the passes through zero of the current.

Similarly, it is possible to send commands to change the power step by step, thereby achieving a fine adjustment of the lighting for example.

Apart from functional and operational enhancements relative to the current systems of the same nature, and thanks to an appropriate and efficient design, the system which forms the object of the invention has a level of complexity which can be attained with the entire system introduced onto a single chip, with the advantages of reliability and economy which this implies.

### BRIEF DESCRIPTION OF THE DRAWINGS

In order that the characteristics of the present invention be better understood, the accompanying drawings show by way of a non-limiting example one practical embodiment thereof. In the drawings:

Figure 1 represents a traditional management system.

Figure 2 represents a management system designed according to the present invention.

Figure 3 corresponds to an operational diagram of the identifier subsystem.

Figure 4 corresponds to an operational diagram of the interpreter subsystem.

### DESCRIPTION OF A PREFERRED EMBODIMENT

The whole system can be subdivided into two subsystems whose functions are well-defined, as shown in figure 2, but which can adopt a number of particularities in accordance with the system which will be described, all with the aim of making it easier to compress the operation of the system.

In figure 2 the total integratable system 6 includes an identifier subsystem 7 and an interpreter subsystem 8.

The identifier subsystem 7 accepts the following inputs: binary coded serial messages (coming from the output of an infrared detector 10 or a two-conductor bus 11) or the signals generated by the manual actuation of a key "in situ" 9. In the case of coded messages, and after checking the authenticity of the message and that the receiver is the destination, the code contained in the message is transferred to the Command Register 12 and the complimentary registers 13 are completed, all of which constitutes the Interpreter Register 14.

Using this Register the interpreter subsystem 8 generates the appropriate outputs 15 for both electronic switches as well as simple relays, or inversion relays in the case of reversible actuators, which complete the controller outputs 16.

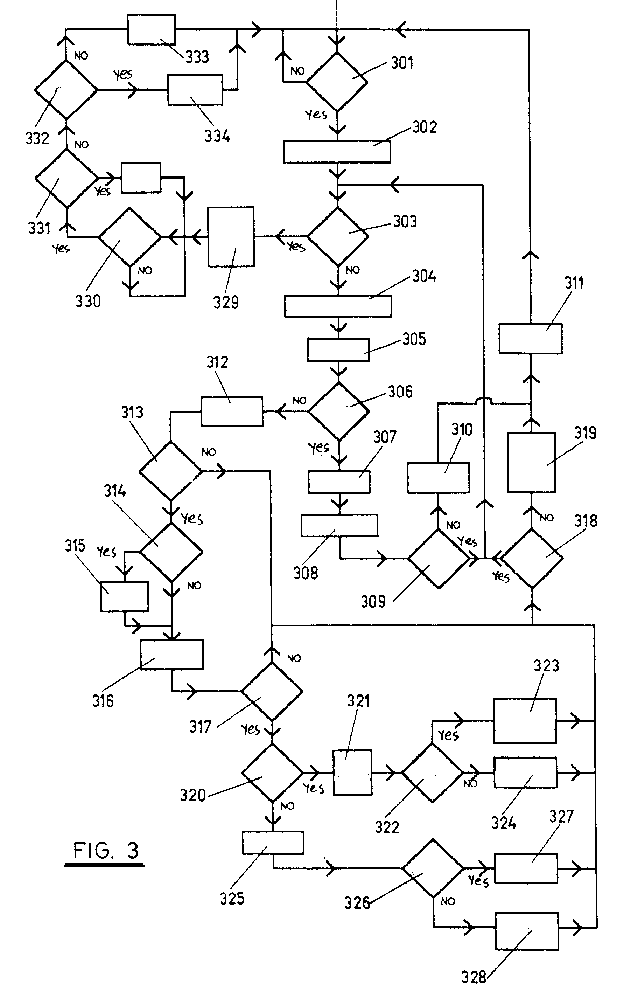

The entire operation of the identifier subsystem is indicated in the diagram shown in figure 3 in one of its possible forms in order to clarify the principles and strategies of the system of the invention. In the absence of any signal the whole system remains in passive wait mode (loop 301 with NO branch) until a signal arrives (YES branch) at which moment the system is activated with the starting of the local clock 302.

If the signal is a coded message (303 NO branch) message bit synchronization 304 is started, sequentially consisting of a counter which always starts with the first clock pulse before the signal arrives and which always resets to zero with the leading edge of the signal. This counter always gives a signal T₁ seconds after it has started, and signals at times of T₂ seconds (where T₂ > T₁) and T₃ seconds (where T₃ > T₂) if it has not been reset to zero beforehand.

Supposing that the command consists of N_{MAX} bits, these must continue to be sent until a shift register has been completed. This is done by adding one to the bit counter 305 and asking if the message is complete 306. If it is not (YES branch) the system goes on to synchronous sampling 307 with the signal at T₁ seconds which, in the usual case of representation by bit width, gives a high voltage signal if the bit is 1 and a low voltage signal if it is 0. The identified bit occupies the space left in the shift register 308 and the absence of the signal at T₂ seconds implies a correlative bit (309 YES branch) which leads to the start of a new bit loop 303.

If the message is incorrect or incomplete before it has been completed, the signal appears at T₂ seconds (309 NO branch) which leads to the initial wait mode after resetting to zero (310 and 311).

If the message is complete (306 NO branch), the bit counter 312 resets to zero and the system asks whether the switch which the system is serving is the destination. If so (313 YES branch) it is determined whether it is by common direction (314 YES branch) which is recorded in the Complementary Register 315. Since a command (word) has been completed, 1 must be added to the command counter 316 and a new word or command cycle must be started unless the synchronization signal appears at T₃ seconds because there has been no correlative word to reset this counter to zero, in which case (NO branch 318) after the resets to zero 319 the system goes to passive wait mode via 311. If there is a correlative word (318 YES branch) the cycle reiteration has a triple initial casuistry.

For the first reiteration (M = 1) it goes directly via the NO branch from 317 to 318. For the second reiteration (YES branch of 317 followed by the YES branch of 320) the message is considered to be confirmed by the coincidence of directions and so the command is transferred from the shift register to the Auxiliary one 321 and immediately to the Principal one 324 in all cases (322 NO branch) unless it is an emulation command (322 YES branch) which, as it is conditional, only requires that the previous register (of the last command carried out) be converted to the opposite command, which in the example shown means complement 0₁ and reset the remainder to zero.

The completion of the third reiteration (NO branch in 320) is taken to represent the validity of the command (V_{T} = 1 in 325) and it only remains to determine whether the keystroke corresponds to a brief pulse (P_{B} = 1) or a persistent pulse (P_{P} = 1). This cannot be determined until the maximum number of reiterations has been reached (YES branch in 326). If this is the case the following assignments are made: P_{P} = 1 and P_{B} = 0 (327) and remain until the reiterations are complete. In the previous reiterations the provisional setting P_{B} = 1 is made and is confirmed (P_{B} = P_{P}) if no more iterations are produced (319) via the NO branch of 318.

If the command does not affect the switch to which the system is ascribed (313 NO branch) the system goes directly to the word cycle.

If, instead of receiving a message a key is pressed "in situ" (YES branch in 303) the first thing that happens is the generation of the corresponding instruction code (329) after which it has to be determined whether the keystroke is brief or persistent in order to complete the complementary register (evaluating P_{B} and P_{P}).

In the appropriate solution in this example, the generation of the instruction code always requires that O₂, O₃ and O₄ be set to zero whilst the value of O₁ varies according to the type of switch which the system being described is serving.

If it is ascribed to an electronic switch, and as it has been decided in this embodiment example that the key implies conditional commands, O₁ only has to be set to the complement (Öₙ ) of the value it had previously and which defined the last action carried out.

If the key is ascribed to a simple relay switch the procedure is the same. However, if it is ascribed to a dual relay, for carrying out the inversion necessary in the case of reversible functions using two keys or one key with two positions, the command must be unconditional and in this case: O₁ = 1 for operation in one direction (eg. to raise blinds, open curtains, etc.) and O₁ = 0 for the reverse action.

To determine whether the keystroke corresponds to a brief pulse (P_{B} = 1) or a persistent pulse (P_{P} = 1) it has to be checked whether or not a time signal has arrived. This happens when the brief pulse limit time has elapsed since the beginning of the keystroke and, until it does, the system remains in a wait cycle (330 NO branch). When the signal appears (330 YES branch) the system asks whether or not the key is still being held down.

If the response is negative it goes on to the initial wait mode after setting P_{B} = 1 (via 331 NO branch, via 332 NO branch and 333). If, however, the keystroke is continuous, ie. a persistent pulse, it returns to the wait loop having set P_{P} = 1 (YES branch of 331 and 335).

This sequence is repeated if the key is still being held down when new time signals arrive until this is no longer the case at which time the fact is recorded in the complementary register, setting P_{P} = 0 before then going to the initial wait cycle (332 YES branch, 334).

When a key is pressed the interpretation is diverted (via the YES branch of 303) to the process described above, independent of the presence or absence of a remote message. Keystrokes therefore have priority over messages.

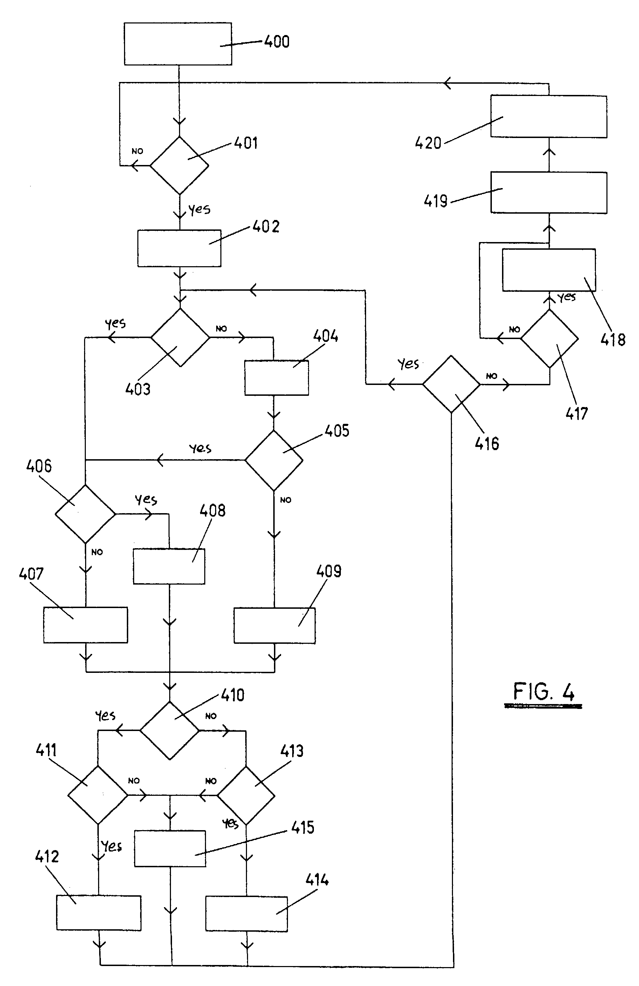

As in the case of the Identifier Subsystem, the entire operation of the interpreter subsystem is made clear by describing the operation represented in the diagram shown in figure 4, and again its functions may also be realized using integrated digital circuits in a reasonably conventional way.

The subsystem remains in a wait loop (401 NO branch) until the contents of the complementary register become 1, P_{B} or P_{P} meaning that there is a command to be carried out and that the register to be interpreted is complete, with which the process of interpretation begins (YES branch of 401) and which leads to the generation of the outputs.

In the case of an electronic switch, said outputs are simply the binary configurations of a counter (L). In the case of a simple relay there is one bit (R), and in the case of relays for inversion (reversible actions) there is one bit for each relay (U for the direct action and D for the reverse action).

If the receivers are simple relays or dual relays for inversion, the interpretation requires that a decision be made between two opposites and that the end of the operation be determined only in the case of persistent keystrokes, or pulses, and in particular at the end of said keystroke.

The decision between two opposites can be made as soon as a keystroke is detected (YES branch of 401) as shown in the diagram (402) and exactly as is indicated, since O₁ is the direction bit always in the instruction code and R or U or D becoming one implies the closing of the corresponding relay contact.

In the case of a simple relay a brief pulse means the opening or closing is to be maintained until a new command is sent. In the case of reversible actions a brief pulse means that the movement is to be maintained until an end-of-travel switch, connected to the corresponding relay in series, is opened. Thus in neither case does the system have to decide on the end of the operation initiated, and it does not matter whether or not the bits R, D and U keep their values until a new command arrives, in the form of a message or a keystroke "in situ".

However, if the keystroke is continuous, i.e. a persistent pulse (P_{P} = 1), the relay operation has to stop (opening the corresponding contacts). If effect, the interpretation process indicated in the diagram leads (via the NO branch of 416) to setting U = O = D (418) in the case of a persistent pulse (YES branch of 417), whereas if the pulse is brief the values of U and D are maintained (NO branch of 417). However, the comparison cannot be made at this point using P_{P}, as it is always zero, and has to be done by consulting a register P_{P}* which is set to 1 (404) as soon as the condition of a persistent pulse has been established (NO branch of 403).

In the case of an electronic switch the interpretation of the command consists of deciding on the rate, the direction and final state in a single counter sequence (L) according to the command received.

Thus, if the pulse is brief, i.e. it does not correspond to 407 and regulation (403 YES branch), the sequence must be executed rapidly (407) until the extreme configuration of the counter is reached (L_{MAX} or 0, NO branch of 411 or 413) for the entire system to go into passive wait mode, having first carried out resets to zero (415) and stopped the clock (420). If these extremes are not reached (YES branches of 411 or 413) the corresponding executions of the sequence are carried out (412 or 414), a check is made as to whether it has to continue (416 YES branch) and the operation is repeated (entering via 403).

If the pulse is persistent (403 NO branch), i.e. it corresponds to a variation in power whilst the key is pressed, the sequence must be executed slowly 409 to allow for the response to the effect of this variation. As in the previous case, the sequence is executed (410 followed by 411 or 413 YES branches, 412 or 414) until the indication that the pulse has ended (P_{P} = 0) leads us to the final steps 419 and 420 via the NO branch of 417 or until the limits (L_{MAX} or 0) are reached (NO branches of 411 or 413).

There are, however, two special commands which require special treatment for interpretation. Firstly, if the command has a common direction and it is decided, as in the example described, that it is only used for switching, then it should always be considered as a brief pulse (405 YES branch).

Other commands which also require special treatment are those for variation by one step only and which are concluded when this step has been executed. As this would not happen in the case of the system described, it is given an identification K = 1 (YES branch of 406 to 408) such that when the system comes to the question whether or not to continue, it goes directly to the aforementioned final steps (via the NO branch of 416 since K = 1).

Obviously the direction of advance of the basic sequence depends in all cases on whether the command implies increasing the power (switching on or raise in power, and in any case O₁ = 1) or a reduction (switching off or decrease in power, and in any case O₁ = 0). The advances or reversals of the reversible counter L (412 or 414) are reached after being recognized as such (O₁) in the command (via 410 YES or NO branches).

It should be emphasized that, when going in to passive wait mode, the code of the last command executed is always left intact in the command register and of course the last outputs for carrying out said command remain fixed.

The interpretation processes for electronic switches, relays and reversible conditionings are simultaneous and not only do not interfere with each other, but they also have common parts and, as such, common implementations.

The mode of embodiment which has been described in order to illustrate the practicability of the basic concepts it involves results in an implementation of relatively moderate complexity, making it possible to integrate the entire discreet system onto a single chip, with all the positive consequences this implies with regard to reliability and cost.

## Claims

1. A management system (6) for electric domestic appliances, in particular for controlling via an electronic switch the connection and regulation of power conveyed to associated mains receivers in response to messages received via local and remote commands, the system (6) comprising an identifier subsystem (7) which determines whether the said system (6) is the intended recipient of the messages received, which detects incorrect or incomplete messages and which, in the case of a correct message, sets an interpreter register (14) to include a command code contained within the message and information on whether the message was received as a brief pulse or a persistent pulse, the system further comprising an interpreter subsystem (8) which interprets the command code from the interpreter register and interprets a brief message as a message to switch on, switch off or commutate the electronic switch on the one hand and a persistent message as a message to regulate the electronic switch on the other hand, and which generates control signals appropriate for the electronic switch based on a reversible counter, the direction, rate and final state of whose count sequence is controlled such that all changes in the power conveyed to the mains receiver, including switching on or switching off, are effected by going through a sequence of intermediate stages in accordance with the reversible count sequence (L).

2. A management system (6) according to claim 1. wherein the remote control is effected by means of commands transmitted by infrared rays, the corresponding detectors and transmitters being of the type sensitive to infrared radiation.

## Patentansprüche

1. Ein Steuersystem (6) für elektrische Haushaltsgeräte, insbesondere zur Steuerung der Verbindung und Regulierung der Spannungszufuhr zu verbundenen Netzempfängern als Antwort auf Anweisungen, die über lokale und ferngesteuerte Signale erhalten werden, mittels eines elektronischen Schalters, wobei das System (6) ein identifizierendes Untersystem (7) einschließt, das bestimmt, ob das genannte System (6) als Empfänger der erhaltenen Anweisungen bestimmt ist, das unrichtige oder unvollständige Anweisungen aufspürt und das im Falle einer richtigen Anweisung ein Übersetzungsregister (14) schaltet, um einen in der Anweisung enthaltenen Kommandocode darüber, ob die Anweisung als kurzer Impuls oder als durchgehender Impuls erhalten wurde, einzuschließen, wobei das System ferner ein übersetzendes Untersystem (8) einschließt, das den Kommandocode vom Übersetzungsregister übersetzt und einerseits eine kurze Anweisung als eine Anweisung, den elektronischen Schalter ein-, aus- oder umzuschalten, und andererseits eine durchgehende Anweisung als eine Anweisung, ihn zu regulieren, übersetzt, und das Kontrollsignale, die für den elektronischen Schalter geeignet sind und die auf einem umkehrbaren Zähler basieren, erzeugt, wobei die Zählsequenz dieses Zählers so kontrolliert wird, daß alle Änderungen in der Spannung, die dem Netzempfänger übermittelt wird, das Ein- und Ausschalten eingeschlossen, dadurch ausgeführt werden, daß eine Sequenz von Zwischenstufen gemäß der umkehrbaren Zählsequenz (L) durchlaufen wird.

2. Ein Steuersystem (6) gemäß Anspruch 1, worin die Fernsteuerung durch Kommandos, die durch Infrarotstrahlen übermittelt werden, ausgeführt wird, wobei die entsprechenden Empfänger und Sender sensibel gegenüber der Infrarotstrahlung sind.

## Revendications

1. Système de gestion (6) pour des appareils électroménagers, en particulier pour contrôler au moyen d'un commutateur électronique la connexion et la régulation de la puissance envoyée à des récepteurs de secteur associés en réponse aux messages reçus par une télecommande ou une commande locale, le système (6) comprenant un sous-système d'identification (7) qui détermine si ledit système (6) est le récipient prétendu des messages reçus, qui détecte des messages incorrectes ou incomplets et qui, en cas de message correct, établit un registre d'interprétation (1) pour inclure un code de commande contenu dans le message et l'information, ou si le message a été reçu comme une impulsion brève ou une impulsion persistante, le système comprenant également un sous-système d'interprétation (8) qui interprète le code de commande du registre d'interprétation et interprète d'une part, un message bref comme un message pour mettre en circuit, mettre hors circuit ou commuter le commutateur électronique, et d'autre part, un message persistant comme un message pour régler le commutateur électronique, lequel génère des signaux de contrôle appropriés pour le commutateur électronique basé sur un compteur réversible, dont la direction, la vitesse et l'état final de la séquence de comptage sont contrôlés de manière que tous les changements dans la puissance envoyée aux récepteurs de secteur, y compris la mise en circuit ou la mise hors circuit, sont effectués en passant par une séquence de pas intermédaires selon la séquence de comptage reversible (L).

2. Un système de gestion (6) selon la revendication 1, où la télécommande est effectuée au moyen de commandes transmises par des rayons infrarouges, les détecteurs et les transmetteurs correspondants étant du type sensible au rayonnement infrarouge.
